# EUROPÄISCHE PATENTSCHRIFT

(11) **EP 4 265 996 B1**
(45) Veröffentlichungstag und Bekanntmachung des Hinweises auf die Patenterteilung: **12.08.2026**
(21) Anmeldenummer: 22169535.6
(22) Anmeldetag: 22.04.2022
(51) Int. Cl.: F28D 20/02, F28D 7/00, F28F 1/04, F28F 9/02, F28F 19/01

(54) **VORRICHTUNG ZUR AUFNAHME UND ABGABE LATENTER WÄRME**
LATENT HEAT ABSORBING AND DISCHARGING DEVICE
DISPOSITIF D'ABSORPTION ET D'ÉMISSION DE LA CHALEUR LATENTE

(43) Veröffentlichungstag der Anmeldung: 25.10.2023
(73) Patentinhaber: Rubitherm Technologies GmbH, 12307 Berlin (DE)
(72) Erfinder: DEUBEL, Lutz, 12307 Berlin (DE); PAWELZ, Felix, 12307 Berlin (DE)
(74) Vertreter: Schulz Junghans Patentanwälte PartGmbB

(56) Entgegenhaltungen:
- WO-A1-2017/151612
- CN-A- 110 617 727
- DE-U1- 202019 105 940
- GB-A- 2 467 812

## Beschreibung

Die Erfindung betrifft eine Vorrichtung zur Aufnahme und Abgabe latenter Wärme.

In Wärmeübertragern durchströmt ein fluides Medium Fluidleitungen des Wärmeübertragers, wobei Wärme zwischen dem fluiden Medium und einem Wärmeübertragermedium ausgetauscht wird. In herkömmlichen Wärmeübertragern handelt es sich bei dem Wärmeübertragermedium um Wasser, wobei das Wasser je nach Temperaturunterschied zum fluiden Medium Wärme an das fluide Medium abgibt oder Wärme von dem fluiden Medium aufnimmt, wobei sich die Temperatur des Wassers verändert. Zur Erhöhung der Wärmeübertragung wird in derartigen Wärmeübertragern das Wärmeübertragermedium häufig durch aufwendige Pumpkreisläufe gepumpt, um entsprechend größere Massen und Wärmekapazitäten am Wärmeaustausch zu beteiligen. Alternative, kompakte (dezentrale) Wärmeübertrager ohne derartige Pumpkreisläufe setzen zur Erhöhung der austauschbaren Wärmekapazität auf Phasenwechselmaterialien, um die in einem Phasenübergang des Phasenwechselmaterials speicherbare oder abrufbare latente Wärme zu nutzen. Diese haben den Vorteil, dass die verhältnismäßig hohe im Phasenübergang speicherbare oder abrufbare spezifische Wärmekapazität für den Wärmeaustausch verwendet werden kann.

Hiervon ausgehend ist aus der GB 2467812 A eine Fluidkonditionierungsanordnung mit einem primären und einem sekundären Wärmeübertrager bekannt. Der primäre Wärmeübertrager ist dabei mit einem Phasenwechselmaterial befüllt. Weiterhin weist die Fluidkonditionierungsanordnung eine Steuerungseinheit auf, die den sekundären Wärmeübertrager steuert, sobald der primäre Wärmeübertrager das Fluid nicht auf einem vorbestimmten akzeptablen Niveau kühlen und/oder erwärmen kann. Ist dies der Fall, schaltet die Steuerungseinheit einen Booster mit einer Wärmepumpe mit einem kalten Wärmeübertrager und einem heißen Wärmeübertrager zu, um die Wärmeübertragung wieder auf das akzeptable Niveau zu heben. Nachteilig hierbei ist, dass die Fluidkonditionierungsanordnung wegen der limitierten Wärmekapazität des Phasenübergangs nur teilweise unter Nutzung der latenten Wärme betrieben werden kann, bevor herkömmliche Wärmeübertrager mit den bekannten Nachteilen zugeschaltet werden.

WO 2017/151612 A1 offenbart eine Vorrichtung zur Abgabe und Aufnahme latenter Wärme mit einem Wärmeübertrager und einem Phasenwechselmaterial.

Der vorliegenden Erfindung liegt hiervon ausgehend die Aufgabe zugrunde, eine Vorrichtung zur Aufnahme und Abgabe latenter Wärme bereitzustellen, welche eine verbesserte Nutzung der latenten Wärme zum Wärmeaustausch ermöglicht.

Diese Aufgabe wird durch eine Vorrichtung mit den Merkmalen des Anspruchs 1 gelöst.

Vorteilhafte Ausgestaltungen dieser Erfindungsaspekte sind in den entsprechenden Unteransprüchen angegeben und werden nachfolgend beschrieben.

Die Erfindung betrifft eine Vorrichtung zur Abgabe und Aufnahme von latenter Wärme. Erfindungsgemäß weist die Vorrichtung einen Wärmeübertrager mit einem mit einem Phasenwechselmaterial befüllbaren oder befüllten Reservoir auf, welches durch eine Wandung begrenzt ist, welche eine Füllöffnung zum Befüllen oder Entleeren des Phasenwechselmaterials aufweist. Der Wärmeübertrager umfasst weiterhin mehrere durch das Reservoir verlaufende Fluidleitungen, durch welche ein fluides Medium strömbar ist. Jede Fluidleitung erstreckt sich von einer jeweiligen ersten Öffnung der Wandung zu einer jeweiligen zweiten Öffnung der Wandung durch das Reservoir des Wärmeübertragers, sodass die Fluidleitungen jeweils über das Reservoir voneinander getrennt sind. Somit ist, wenn das fluide Medium durch den Wärmeübertrager strömt, latente Wärme durch Wärmeaustausch zwischen den Fluidleitungen und dem Reservoir unter Wärmeaufnahme durch das fluide Medium vom Phasenwechselmaterial auf das fluide Medium übertragbar oder unter Wärmeabgabe vom fluiden Medium durch das Phasenwechselmaterial aufnehmbar. Des Weiteren weist die Vorrichtung eine Strömungseinrichtung auf, welche dazu ausgebildet ist, eine Strömung des fluiden Mediums entlang der Fluidleitung zu erzeugen und umzukehren.

Die Erfindung ermöglicht somit einen Wärmeaustausch zwischen dem fluiden Medium und dem Phasenwechselmaterial. Das Phasenwechselmaterial kann im Zuge eines Phasenübergangs des Phasenwechselmaterials von einer ersten Phase zu einer zweiten Phase vom fluiden Medium abgegebene Wärme in Form von latenter Wärme aufnehmen, wobei sich das fluide Medium abkühlt. Auch kann das Phasenwechselmaterial im Zuge eines umgekehrten Phasenübergangs von der zweiten Phase in die erste Phase latente Wärme an das fluide Medium abgeben, wobei sich das fluide Medium erwärmt. Bei der ersten Phase handelt es sich bevorzugterweise um eine feste Phase und bei der zweiten Phase um eine flüssige Phase des Phasenwechselmaterials.

Phasenwechselmaterialien bieten den Vorteil, dass ein Wärmeaustausch nicht nur unter Temperaturveränderung, sondern an der Phasenübergangstemperatur des jeweiligen Phasenwechselmaterials auch bei konstanter Temperatur in Form von latenter Wärme möglich ist. Die im Phasenübergang als latente Wärme abrufbare bzw. speicherbare Wärme ist darüber hinaus verhältnismäßig hoch: wenn beispielsweise die spezifische Wärmekapazität von keramischem Material etwa 1 kJ/kg K beträgt, während ein Phasenwechselmaterial, zum Beispiel ein Salzhydrat, beim Phasenübergang bei einer Phasenübergangstemperatur von 21 °C eine Wärmekapazität von 180 kJ/kg als latente Wärme speichern oder freisetzen kann, wäre bei dem keramischen Material daher eine Temperaturdifferenz von 180 K erforderlich, um bei gleichen Massen die gleiche Energie durch Wärmeübertragung auszutauschen.

Die Strömungsvorrichtung ermöglicht insbesondere das Erzeugen einer Strömung des fluiden Mediums durch die zumindest eine Fluidleitung, wobei der Wärmeaustausch zwischen dem fluiden Medium und dem Phasenwechselmaterial vorteilhaft erhöht wird. Weiterhin ist die Strömungsvorrichtung erfindungsgemäß dazu ausgebildet, die Strömungsrichtung umzukehren.

In einer bevorzugten Ausführungsform handelt es sich bei dem fluiden Medium um ein Gas, insbesondere Luft. Die erfindungsgemäße Vorrichtung eignet sich daher insbesondere zur Verwendung als dezentrale Lüftungskomponente, wobei keinerlei aufwendige Pumpkreisläufe benötigt werden.

Das Reservoir ist dabei bevorzugt zumindest teilweise von der Wandung begrenzt. Die Wandung kann dabei insbesondere einen zumindest abschnittsweise polygonalen, kreisförmigen und/oder elliptischen Querschnitt aufweisen. Die Wandung kann insbesondere die Form eines Zylinders, eines Quaders oder eines Würfels aufweisen.

Die zumindest eine Fluidleitung kann entlang des Wärmeübertragers zumindest abschnittsweise einen zum Beispiel polygonalen, kreisförmigen und/oder elliptischen Querschnitt aufweisen.

Gemäß einer Ausführungsform der Erfindung ist die Strömungseinrichtung ferner dazu ausgebildet, die Strömung des fluiden Mediums umzukehren, sobald sich eine Temperatur des Phasenwechselmaterials relativ zur Phasenübergangstemperatur des Phasenwechselmaterials verändert.

Somit kann die Strömungsrichtung geändert werden, sobald eine durch das Phasenwechselmaterial als latente Wärme aufnehmbare oder abgebbare Wärmekapazität des Phasenwechselmaterials vollständig aufgenommen oder abgegeben wurde.

In alternativer Ausführungsform ist vorgesehen, dass die Strömungseinrichtung dazu ausgebildet ist, die Strömung des fluiden Mediums umzukehren, sobald das Phasenwechselmaterial einen vordefinierten Anteil der in einem Phasenübergang des Phasenwechselmaterials aufnehmbaren oder übertragbaren Wärme aufgenommen oder übertragen hat, insbesondere einen Anteil von 50 % bis 80 %.

Insbesondere ist vorgesehen, dass die Strömungsrichtung für einen vordefinierten ersten Zeitraum mittels der Strömungseinrichtung erst dann gekehrt, wenn die durch das Phasenwechselmaterial als latente Wärme aufnehmbare oder abgebbare Wärmekapazität des Phasenwechselmaterials vollständig aufgenommen oder abgegeben wurde und, dass die Strömungseinrichtung für einen vordefinierten zweiten Zeitraum mittels der Strömungsumkehr bereits umkehrt, sobald das Phasenwechselmaterial einen vordefinierten Anteil der in einem Phasenübergang des Phasenwechselmaterials aufnehmbaren oder übertragbaren Wärme aufgenommen oder übertragen hat. Somit kann vorteilhaft die Kühl- bzw. Heizleistung der Vorrichtung an zeitlich variierende Temperaturgradienten der Umgebung angepasst werden.

Die Strömungsrichtung kann mittels der Strömungseinrichtung insbesondere zyklisch verändert werden, sodass das Phasenwechselmaterial wiederholt latente Wärme aufnimmt oder abgibt.

In einer weiteren Ausführungsform der Erfindung ist die Strömungseinrichtung ferner dazu ausgebildet, die Strömung des fluiden Mediums zyklisch nach einer vordefinierten Zeitspanne umzukehren, insbesondere nach einer Zeitspanne zwischen 300s und 700s. Bei der Strömungseinrichtung kann es sich zum Beispiel um einen Ventilator handeln.

Gemäß einer Ausführungsform der Erfindung weist die Vorrichtung mehrere Ventilatoren auf. Insbesondere ist vorgesehen, dass zumindest zwei Ventilatoren derart eingerichtet und ausgebildet sind, jeweils zueinander entgegengesetzte Strömungen entlang der Fluidleitung zu erzeugen. Dies ermöglicht vorteilhaft die erfindungsgemäße Umkehr der Strömungsrichtung, indem abwechselnd Ventilatoren mit jeweils umgekehrter Strömungsrichtung zu- bzw. abgeschaltet werden.

Nach einer Ausführungsform der Erfindung sind die Strömungseinrichtung und die zumindest eine Fluidleitung derart zueinander bewegbar, dass die Strömungsrichtung unter einer Relativbewegung zwischen der Strömungseinrichtung und der zumindest einen Fluidleitung umkehrbar ist. Insbesondere ist vorgesehen, dass es sich bei dem Wärmeübertrager um einen Rotationswärmeübertrager handelt. Hierbei kann die Strömungseinrichtung beispielsweise zwei voneinander getrennte, gegenläufige Strömungen durch den Wärmeübertrager leiten, wobei der Wärmeübertrager unter Rotation abwechselnd latente Wärme aufnimmt oder abgibt.

Die Füllöffnung kann zum Beispiel unmittelbar am Reservoir des Wärmeübertragers angeordnet sein. Die Füllöffnung ist bevorzugterweise mittels eines mit der Öffnung korrespondierenden Verschlusses reversibel verschließbar. Das Reservoir kann insbesondere derart durch die Wandung begrenzt sein, dass das Reservoir einen Hohlraum ausbildet, wenn die Öffnung verschlossen ist.

Der Wärmeübertrager weist mehrere Fluidleitungen auf. Somit kann eine Wärmeübertragungsfläche, über welche beim Durchströmen der Fluidleitungen Wärme zwischen dem Phasenwechselmaterial und dem fluiden Medium austauschbar ist, vorteilhaft erhöht werden.

Die Fluidleitungen sind jeweils über das Reservoir voneinander getrennt. Dies ermöglicht zum einen vorteilhaft das Befüllen des Reservoirs über insbesondere eine einzige Füllöffnung. Zum anderen wird in dieser Ausführungsform die Wärmeübertragungsfläche weiter erhöht. Die Möglichkeit zur Verwendung von wenigen, insbesondere einer einzigen Füllöffnung verringert dadurch weiterhin vorteilhaft das Risiko einer Leckage, bei welcher das Phasenwechselmaterial aus dem Reservoir austreten bzw. Fremdmaterialien in das Reservoir eintreten könnten.

Insbesondere ist vorgesehen, dass die Fluidleitungen jeweils parallel zu einer Längserstreckungsachse des Wärmeübertragers durch das Reservoir verlaufen. Durch eine derartige Anordnung der Fluidleitungen kann der Druckabfall des fluiden Mediums beim Durchströmen des Wärmeübertragers vorteilhaft abgesenkt werden, was zu einem Wärmeaustausch beiträgt. Bei dem Wärmeübertrager kann es sich um einen Rohrbündelwärmeübertrager handeln.

Weiterhin ist in einer Ausführungsform der Erfindung vorgesehen, dass sich die Fluidleitungen im Querschnitt durch den Wärmeübertrager betrachtet um Kreisbögen herum erstrecken und dabei konzentrisch um die Längserstreckungsachse des Wärmeübertragers angeordnet sind. Dies führt zu einer vorteilhaft hohen Wärmeübertragungsfläche, wobei der Wärmeübertrager weiterhin über insbesondere eine einzelne Füllöffnung befüllbar ist.

Gemäß einer Ausführungsform der Erfindung weist die zumindest eine Fluidleitung Strukturelemente zur Erhöhung einer Wärmeübertragung zwischen dem Phasenwechselmaterial und dem fluiden Medium auf. Die Strukturelemente sind dabei insbesondere dazu ausgebildet, eine Strömung im Bereich der Formelemente zu erzeugen. Bevorzugt handelt es sich hierbei um eine turbulente Strömung. Bei den Strukturelementen kann es sich insbesondere um Beulen oder Dellen handeln.

Nach einer Ausführungsform der Erfindung liegt die Phasenübergangstemperatur des Phasenwechselmaterials im Bereich von -50° bis 100 °C, insbesondere im Bereich von 10 K bis 20 K relativ zu einer Raumtemperatur. Somit kann durch eine geeignete Wahl des Phasenwechselmaterials vorteilhaft eine an eine Raumtemperatur angepasste Arbeitstemperatur ausgewählt werden, bei der die Vorrichtung betrieben wird. Die Vorrichtung kann durch die Verwendung latenter Wärme ebenfalls vorteilhaft bei konstanter Temperatur betrieben werden.

In einer weiteren Ausführungsform ist vorgesehen, dass die Vorrichtung mehrere Wärmeübertrager aufweist. Insbesondere ist dabei vorgesehen, dass die Wärmeübertrager über deren jeweilige zumindest eine Fluidleitung seriell miteinander in Fluidverbindung stehen, sodass das fluide Medium die Wärmeübertrager nacheinander durchströmen kann. Darüber hinaus können in dieser Ausführungsform die jeweiligen Reservoirs der Wärmeübertrager mit voneinander verschiedenen Phasenwechselmaterialien befüllt sein. Die verschiedenen Phasenwechselmaterialien können dabei insbesondere entlang der Fluidverbindung monoton zunehmende oder abnehmende Phasenübergangstemperaturen aufweisen. Dies ermöglicht vorteilhaft eine sukzessive Dämpfung der Temperatur des fluiden Mediums beim Durchströmen der Vorrichtung. Dies ist insbesondere bei verhältnismäßig hohen und/oder schwankenden Temperaturdifferenzen zwischen einem Eingang und einem Ausgang der Vorrichtung von Vorteil, wobei die Wärmekapazitäten der jeweiligen Phasenwechselmaterialien durch die oben geschilderte Wahl der Phasenübergangstemperaturen optimiert entsprechend verwendet werden.

Gemäß einer Ausführungsform der Erfindung weist das Phasenwechselmaterial zumindest eines der folgenden auf: ein Salzhydrat, Alkohol, Ester, insbesondere Fettsäureester, oder ein organisches Material, insbesondere Paraffin.

Ein Material des Wärmeübertragers, insbesondere der Wandung und/oder der zumindest einen Fluidleitung kann beispielsweise Polymere, Verbundwerkstoffe, Graphit, SiC oder Metalle, insbesondere Kupfer oder Edelstahl umfassen. Insbesondere kann die Wandung mit dem Reservoir und der zumindest einen Fluidleitung einen mikroverkapselten, formstabilen Wärmetauscher aus einem Phasenwechsel-Verbundmaterial bilden.

In einer Ausführungsform der Erfindung wird der Wärmeübertrager, das PCM-Reservoir, oder die zumindest eine Fluidleitung mittels zumindest eines der folgenden Verfahren hergestellt: Spritzgießen, Extrudieren, additive und/oder subtraktive Fertigung.

Im Folgenden sollen Ausführungsbeispiele sowie weitere Merkmale und Vorteile der Erfindung anhand der Figuren erläutert werden. Es zeigen:
- Fig. 1: ein erstes Ausführungsbeispiel für einen Wärmetauscher der Vorrichtung;
- Fig. 2A,B: ein zweites Ausführungsbeispiel für einen Wärmetauscher der Vorrichtung, wobei Fig. 2B eine Risszeichnung des Wärmeübertragers aus Fig. 2a darstellt, in der mehrere durch den Wärmeübertrager verlaufende Fluidleitungen sichtbar sind;
- Fig. 3: ein drittes Ausführungsbeispiel für einen Wärmetauscher der Vorrichtung;
- Fig. 4: ein viertes Ausführungsbeispiel für einen Wärmetauscher der Vorrichtung;
- Fig. 5: ein fünftes Ausführungsbeispiel für einen Wärmetauscher der Vorrichtung;
- Fig. 6: ein sechstes Ausführungsbeispiel für einen Wärmetauscher der Vorrichtung;
- Fig. 7: ein siebtes Ausführungsbeispiel für einen Wärmetauscher der Vorrichtung;
- Fig. 8: ein Ausführungsbeispiel für die erfindungsgemäße Vorrichtung; und
- Fig. 9: unter Durchströmung mit Luft gemessene Temperaturverläufe an einem Eingang und einem Ausgang eines erfindungsgemäßen Wärmeübertragers im Vergleich zum Ausgang eines herkömmlichen Keramik-Wärmeübertragers;

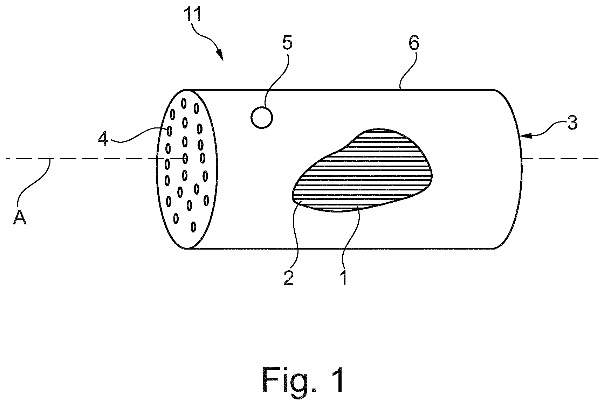

Fig. 1 zeigt ein erstes Ausführungsbeispiel für einen Wärmeübertrager 11 der erfindungsgemäßen Vorrichtung 10, wobei die Strömungseinrichtung 12 hier nicht dargestellt ist. Der Wärmeübertrager 11 weist eine Wandung 6 auf, die ein mit einem Phasenwechselmaterial befüllbares oder befülltes Reservoir 2 begrenzt. Die Wandung 6 ist dabei zylindrisch ausgebildet, sodass sich der Wärmeübertrager 11 um eine Längserstreckungsachse A erstreckt. Der Wärmeübertrager 11 weist weiterhin eine Füllöffnung 5 auf, über welche das Reservoir 2 mit dem Phasenwechselmaterial befüllbar ist. Mehrere Fluidleitungen 1 erstrecken sich jeweils von einer ersten Öffnung 3 zu einer zweiten Öffnung 4 durch den Wärmeübertrager 11, sodass ein fluides Medium zum Wärmeaustausch mit dem Phasenwechselmaterial durch die Fluidleitungen 1 strömbar ist. Die Fluidleitungen 1 sind hier parallel zueinander angeordnet und über das Reservoir 2 voneinander getrennt. Dies sorgt einerseits durch die entsprechend hohe Wärmeübertragungsfläche zwischen den Fluidleitungen 1 und dem Reservoir 2 für einen vorteilhaft effizienten Wärmeaustausch. Weiterhin ermöglicht diese Anordnung der Fluidleitungen 1 ein Befüllen des Reservoirs 2 über eine einzige Füllöffnung 5, was den Betrieb des Wärmetauschers 11 vereinfacht und das Risiko einer Leckage verringert.

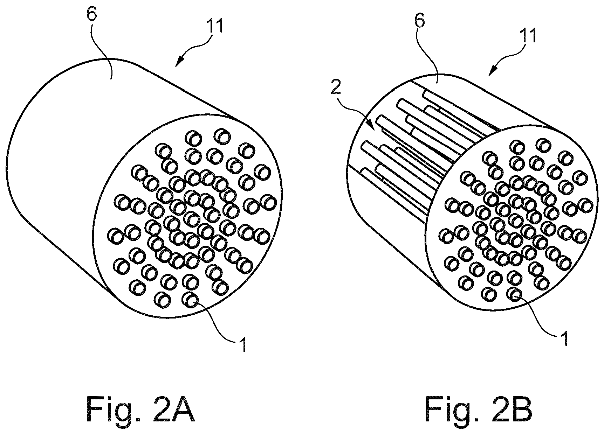

Fig. 2A und Fig. 2B zeigen ein zweites Ausführungsbeispiel für einen Wärmeübertrager 11 der erfindungsgemäßen Vorrichtung 10. Hierbei erstrecken sich die Fluidleitungen 1 parallel zueinander durch den Wärmeübertrager 11, wobei diese, wie in der in Fig. 2A gezeigten Stirnseite sichtbar, kreisförmig um die Längserstreckungsachse A angeordnet sind. Die Risszeichnung aus Fig. 2B ermöglicht einen Blick hinter die Wandung 6 des Wärmeübertragers 11 in das Reservoir 2 des Wärmeübertragers 11, sodass die durch diesen verlaufenden Fluidleitungen 1 sichtbar sind.

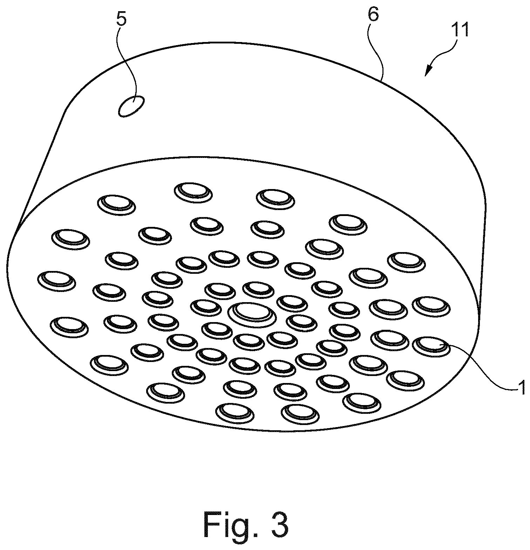

Fig. 3 zeigt ein drittes Ausführungsbeispiel für einen Wärmeübertrager 11 der erfindungsgemäßen Vorrichtung 10. Die Fluidleitungen 1 verlaufen hier analog zum zweiten Ausführungsbeispiel aus Fig. 2 durch den Wärmeübertrager 11, wobei dieser zusätzlich eine Füllöffnung 5 zum Befüllen des Reservoirs 2 mit einem Phasenwechselmaterial aufweist. Die Fluidleitungen 1 des Wärmeübertragers 11 weisen in diesem dritten Ausführungsbeispiel einen jeweils kreisförmigen Querschnitt mit einem Durchmesser von 10 mm auf. Die Länge der Fluidleitungen 1 entlang der Längserstreckungsachse A des Wärmeübertragers 11 beträgt in diesem dritten Ausführungsbeispiel jeweils ungefähr 200 mm. Das Reservoir 2 des in diesem dritten Ausführungsbeispiel gezeigten Wärmeübertragers umfasst ein Volumen von in etwa 2 I. Wird das Reservoir 2 beispielsweise mit einem Salzhydrat mit einem Schmelzpunkt von 21 ° C befüllt, entspricht die beim Phasenübergang als latente Wärme aufnehmbare bzw. abgebbare Wärme für den Wärmeübertrager 11 aus diesem dritten Ausführungsbeispiel in etwa 460 kJ.

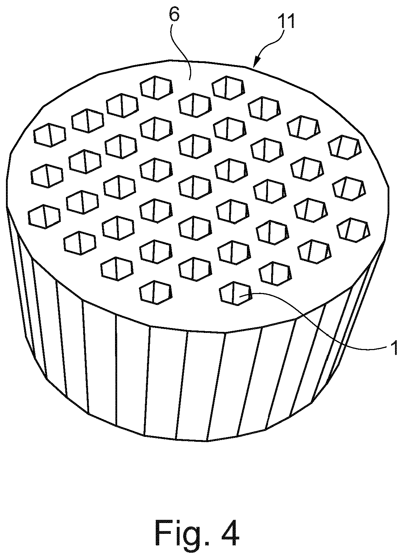

Fig. 4 zeigt ein viertes Ausführungsbeispiel für einen Wärmeübertrager 11 der erfindungsgemäßen Vorrichtung 10. Die Fluidleitungen 1 weisen hier senkrecht zu deren Erstreckungsrichtung durch den Wärmeübertrager 11 einen hexagonalen Querschnitt auf.

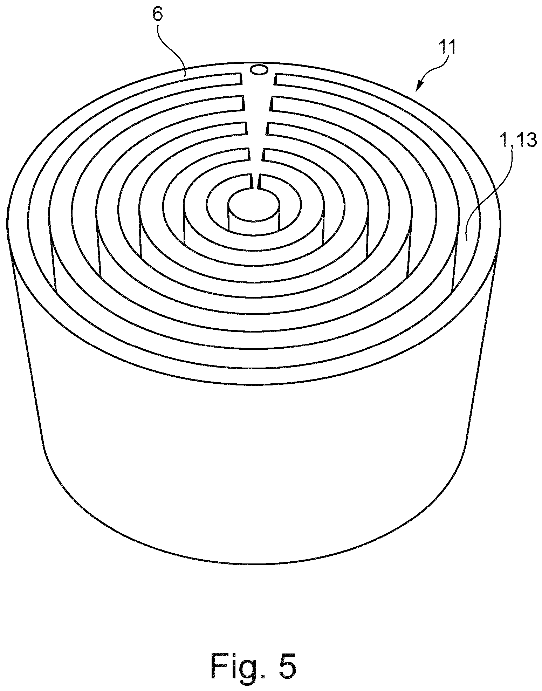

Fig. 5 zeigt ein fünftes Ausführungsbeispiel für einen Wärmeübertrager 11 der erfindungsgemäßen Vorrichtung 10. Hierbei verlaufen die Fluidleitungen 1 ebenfalls parallel zueinander durch den Wärmeübertrager 1, wobei diese im Querschnitt durch den Wärmeübertrager 11 senkrecht zur Längserstreckungsachse A des Wärmeübertragers 1 betrachtet um Kreisbögen 13 herum ausgebildet sind. Die Kreisbögen 13 sind dabei konzentrisch um die Längserstreckungsachse A angeordnet. Diese Form und Anordnung der Fluidleitungen 1 bietet einerseits eine vorteilhaft hohe Wärmeübertragungsfläche. Da die Kreisbögen 13 in diesem fünften Ausführungsbeispiel keine Vollkreise bilden, sondern durch einen Abschnitt 14 unterbrochen sind, ist das Reservoir 2 außerdem vorteilhaft über eine einzige Öffnung 5 befüllbar.

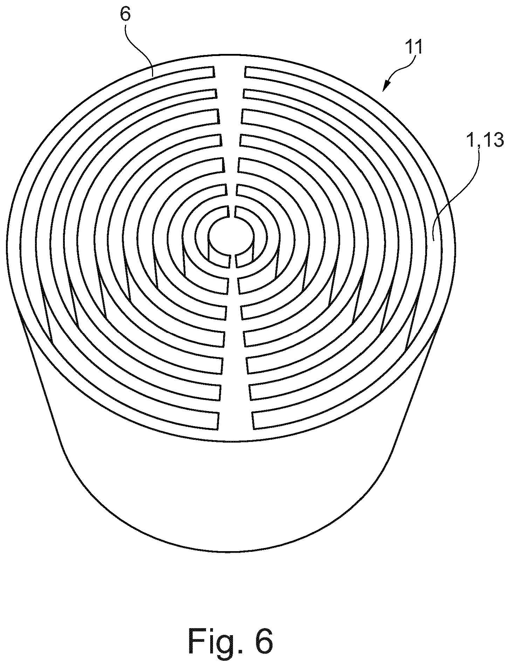

Fig. 6 zeigt ein sechstes Ausführungsbeispiel für einen Wärmeübertrager 11 der erfindungsgemäßen Vorrichtung 10. Ähnlich wie im in Fig. 5 dargestellten fünften Ausführungsbeispiel sind die Fluidleitungen 1 hier im Querschnitt durch den Wärmeübertrager 11 betrachtet um Kreisbögen 13 herum ausgebildet, welche konzentrisch um die Längserstreckungsachse A angeordnet sind. Im Unterschied zum fünften Ausführungsbeispiel sind die Kreisbögen 13 hier entlang zweier Hälften des Wärmeübertragers 11 angeordnet und über zwei Abschnitte 14 voneinander getrennt.

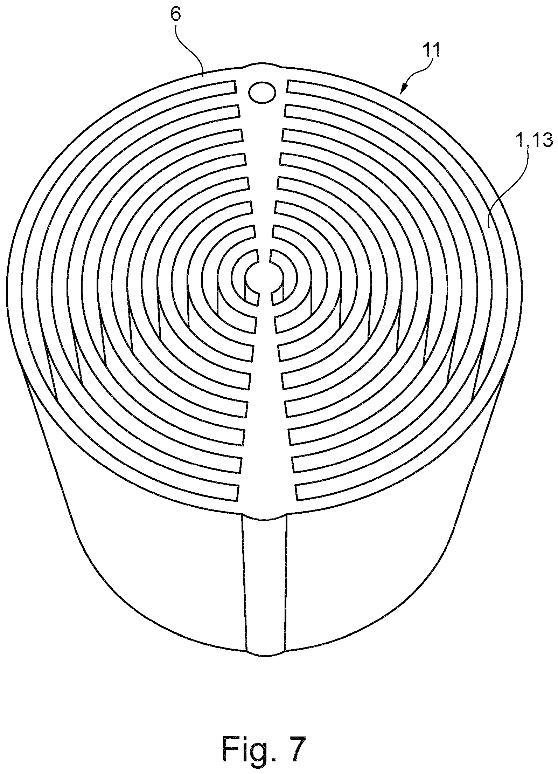

Fig. 7 zeigt ein siebtes Ausführungsbeispiel für einen Wärmeübertrager 11 der erfindungsgemäßen Vorrichtung 10. Die Fluidleitungen 1 verlaufen hier analog zum sechsten Ausführungsbeispiel aus Fig. 6 durch den Wärmeübertrager 11, wobei dieser zusätzlich eine Füllöffnung 5 zum Befüllen des Reservoirs 2 mit einem Phasenwechselmaterial aufweist.

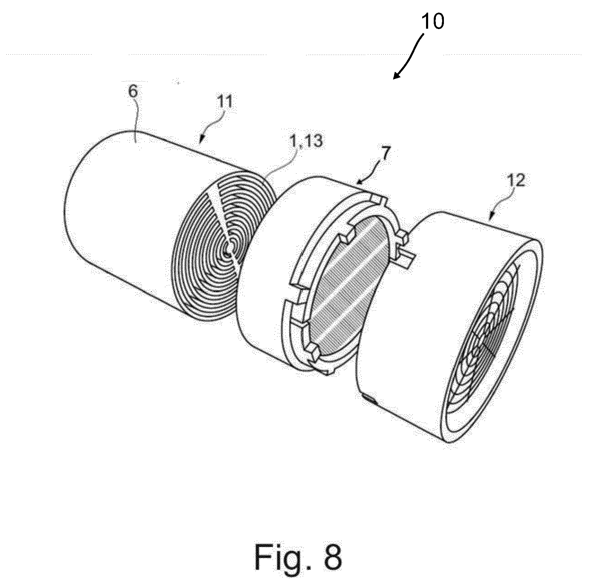

Fig. 8 zeigt ein Ausführungsbeispiel der erfindungsgemäßen Vorrichtung 10 mit einem Wärmeübertrager 11 sowie einer Strömungseinrichtung 12. Die hier gezeigte Vorrichtung 10 weist weiterhin einen optionalen Filter 7 auf. Der Filter 7 ist dazu ausgebildet, Fremdpartikel aus dem durch die Vorrichtung 10 strömenden fluiden Medium zu filtern. Die Strömungseinrichtung 12 sowie der Filter 7 weisen dabei jeweils einen Querschnitt auf, welcher mit dem Querschnitt des Wärmeübertragers 11 korrespondiert, sodass der Wärmeübertrager 11, der Filter 7 und die Strömungseinrichtung 12 seriell aneinander anordenbar sind und die Strömungseinrichtung 12 eine Strömung eines fluiden Mediums durch die Fluidleitungen 1 erzeugen und umkehren kann. Somit wird erfindungsgemäß erreicht, dass, wenn das das fluide Medium durch den Wärmeübertrager 11 strömt, latente Wärme unter Wärmeaufnahme durch das fluide Medium vom Phasenwechselmaterial auf das fluide Medium übertragbar oder unter Wärmeabgabe vom fluiden Medium durch das Phasenwechselmaterial aufnehmbar ist. Bei der Strömungseinrichtung 12 kann es sich zum Beispiel um einen Ventilator handeln.

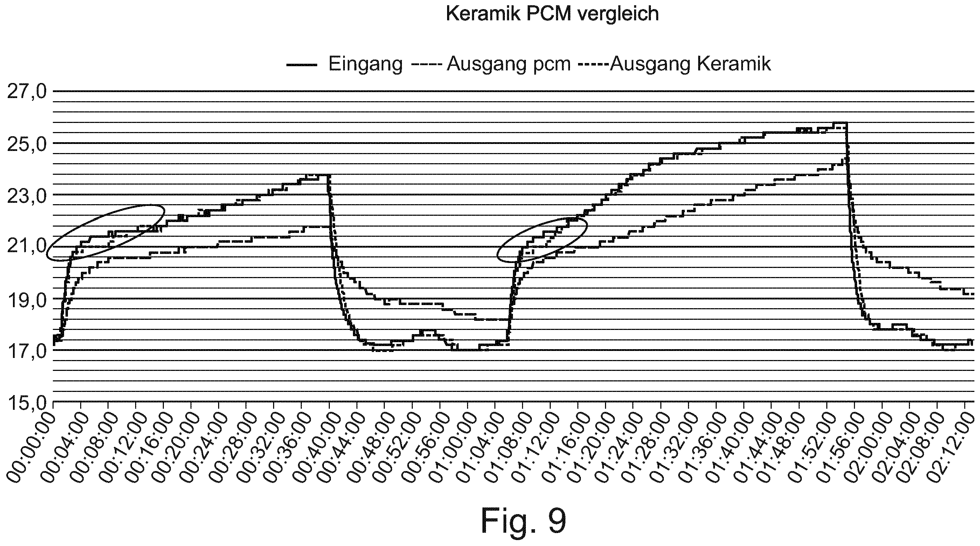

Fig. 9 zeigt gemessene Temperaturverläufe für eine erfindungsgemäße Vorrichtung 10 mit dem mit einem Phasenwechselmaterial befüllten in Fig. 3 dargestellten Wärmeübertrager 11. Die Kurven zeigen dabei in verschiedenen Graustufen Temperaturverläufe von am Ausgang einer Fluidleitung 1 des erfindungsgemäßen Wärmeübertragers 11 im Vergleich zur Lufttemperatur am Ausgang einer Fluidleitung 1 eines herkömmlichen Keramik-Wärmeübertragers während des Betriebs. Außerdem ist die für beide Wärmeübertrager jeweils identische Temperatur an den jeweiligen Eingängen gezeigt. Als Strömungseinrichtung 12 wurde jeweils ein Ventilator verwendet. Für die dargestellten Messungen wurde die Vorrichtung 10 in einem Teststand betrieben, wobei mittels der Strömungseinrichtung 12 abwechselnd kalte Luft aus einem Kühler mit einer Temperatur von 17°C und warme Luft aus einem Heizer mit einer Temperatur von 25 °C durch die Vorrichtung 10 geströmt. Als Phasenwechselmaterial wurde ein Salzhydrat mit einer Phasenübergangstemperatur von 21 °C verwendet.

Zum Zeitpunkt t=0 wurde die Strömungseinrichtung 12 eingeschaltet und warme Luft durch den erfindungsgemäßen sowie den herkömmlichen Keramik-Wärmeübertrager geströmt. An den Sprungstellen im weiteren Verlauf wurde die Strömungsrichtung jeweils umgekehrt und jeweils abwechselnd kalte bzw. warme Luft durch die Wärmeübertrager 11 geströmt.

Der Keramik-Wärmeübertrager zeigt in den ersten Minuten nach t=0 nur einen sehr geringen Unterschied zwischen den Lufttemperaturen am Einlass und am Auslass, ohne dass sich dies insgesamt signifikant auswirkt. Dagegen zeigte der PCM-Wärmetauscher eine beträchtliche Wirkung bei der Reduzierung der Lufttemperatur für viel längere Zeiträume als der Keramikwärmetauscher, ohne auch nur die Speicherkapazität zu erschöpfen. Weiterhin vorteilhaft ermöglicht die erfindungsgemäße Vorrichtung 10 eine Verlängerung der Zyklen gegenüber dem herkömmlichen Keramik-Wärmeübertrager, was im Sinne der Energieeffizienz der Vorrichtung 10 vorteilhaft ist.

### Bezugszeichenliste

| | |
|---|---|
| Fluidleitung | 1 |
| Reservoir | 2 |
| Erste Öffnung | 3 |
| Zweite Öffnung | 4 |
| Füllöffnung | 5 |
| Wandung | 6 |
| Filter | 7 |
| Vorrichtung | 10 |
| Wärmeübertrager | 11 |
| Strömungseinrichtung | 12 |
| Kreisbogen | 13 |
| Abschnitt | 14 |
| Längserstreckungsachse | A |

## Patentansprüche

1. Eine Vorrichtung (10) zur Abgabe und Aufnahme von latenter Wärme, aufweisend:
- einen Wärmeübertrager (11), aufweisend ein mit einem Phasenwechselmaterial befüllbares oder befülltes Reservoir (2), welches durch eine Wandung (6) begrenzt ist, welche eine Füllöffnung (5) zum Befüllen oder Entleeren des Phasenwechselmaterials aufweist, sowie mehrere durch das Reservoir (2) verlaufende Fluidleitungen (1), durch welche ein fluides Medium strömbar ist, wobei sich jede Fluidleitung (3) von einer jeweiligen ersten Öffnung (3) der Wandung (6) zu einer jeweiligen zweiten Öffnung (4) der Wandung (6) durch das Reservoir (2) des Wärmeübertragers (11) erstreckt, sodass die Fluidleitungen (3) jeweils über das Reservoir (2) voneinander getrennt sind und sodass, wenn das fluide Medium durch den Wärmeübertrager (11) strömt, latente Wärme durch Wärmeaustausch zwischen den Fluidleitungen (1) und dem Reservoir (2) unter Wärmeaufnahme durch das fluide Medium vom Phasenwechselmaterial auf das fluide Medium übertragbar oder unter Wärmeabgabe vom fluiden Medium durch das Phasenwechselmaterial aufnehmbar ist und
- eine Strömungseinrichtung (12), welche dazu ausgebildet ist, eine Strömung des fluiden Mediums entlang der Fluidleitung (1) zu erzeugen und umzukehren.

2. Die Vorrichtung (10) nach Anspruch 1, wobei die Strömungseinrichtung (12) und die zumindest eine Fluidleitung (1) derart zueinander bewegbar sind, dass die Strömungsrichtung unter einer Relativbewegung zwischen der Strömungseinrichtung (12) und der zumindest einen Fluidleitung (1) umkehrbar ist.

3. Die Vorrichtung (10) gemäß Anspruch 1 oder 2, weiterhin aufweisend zumindest eine mit dem Reservoir (2) des Wärmeübertragers (10) in Fluidverbindung stehende Füllöffnung (5) zum Befüllen oder Entleeren des Phasenwechselmaterials.

4. Die Vorrichtung (10) gemäß einem der vorhergehenden Ansprüche, wobei die Fluidleitungen (1) jeweils parallel zu einer Längserstreckungsachse (A) des Wärmeübertragers (11) durch das Reservoir (2) verlaufen.

5. Die Vorrichtung (10) gemäß Anspruch 4, wobei sich die Fluidleitungen (1) im Querschnitt durch den Wärmeübertrager (11) senkrecht zur Längserstreckungsachse (A) betrachtet um Kreisbögen (13) herum erstrecken, insbesondere wobei die Kreisbögen (13) konzentrisch um die Längserstreckungsachse (A) des Wärmeübertragers (11) angeordnet sind.

6. Die Vorrichtung (10) gemäß einem der vorhergehenden Ansprüche, wobei die zumindest eine Fluidleitung (1) Strukturelemente zur Erhöhung einer Wärmeübertragung zwischen dem Phasenwechselmaterial und dem fluiden Medium aufweist.

7. Die Vorrichtung (10) gemäß einem der vorhergehenden Ansprüche, wobei die Phasenübergangstemperatur des Phasenwechselmaterials im Bereich von -50° bis +100 °C, insbesondere in einem Bereich zwischen 10 K und 20 K relativ zu einer die Vorrichtung (10) umgebenden Raumtemperatur liegt.

8. Die Vorrichtung (10) gemäß einem der vorhergehenden Ansprüche, wobei das Phasenwechselmaterial zumindest eines der folgenden aufweist: ein Salzhydrat, Alkohol, Ester, insbesondere Fettsäureester, oder ein organisches Material, insbesondere Paraffin.

9. Die Vorrichtung (10) gemäß einem der vorhergehenden Ansprüche, aufweisend mehrere Wärmeübertrager (11), welche über deren jeweilige zumindest eine Fluidleitung (1) seriell miteinander in Fluidverbindung stehen und wobei deren jeweilige Reservoirs (2) jeweils Phasenwechselmaterialien mit voneinander verschiedenen Phasenübergangstemperaturen aufweisen.

10. Die Vorrichtung (10) gemäß Anspruch 9, wobei die Phasenübergangstemperaturen der jeweiligen Phasenwechselmaterialien in den jeweiligen Reservoirs (2) entlang der Fluidverbindung monoton abnimmt oder zunimmt.

## Claims

1. A device (10) for releasing and absorbing latent heat, comprising:
- a heat exchanger (11) comprising a reservoir (2) which can be filled with or is filled with a phase-change material and which is delimited by a wall (6) having a filling opening (5) for filling or emptying the phase-change material, as well as a plurality of fluid lines (1) extending through the reservoir (2), through which a fluid medium can flow, wherein each fluid line (3) extends through the reservoir (2) of the heat exchanger (11) from a respective first opening (3) in the wall (6) to a respective second opening (4) in the wall (6), such that the fluid lines (3) are each separated from one another by the reservoir (2) and such that, when the fluid medium flows through the heat exchanger (11), latent heat can be transferred via heat exchange between the fluid lines (1) and the reservoir (2), so that latent heat can be transferred to the fluid medium from the phase-change material via heat absorption by the fluid medium, or absorbed by the phase-change material from the fluid medium via heat release, and
- a flow device (12) which is configured to generate and reverse a flow of the fluid medium along the fluid line (1).

2. The device (10) according to claim 1, wherein the flow device (12) and the at least one fluid line (1) are movable relative to one another in such a way that the direction of flow can be reversed during relative movement between the flow device (12) and the at least one fluid line (1).

3. The device (10) according to claim 1 or 2, further comprising at least one filling opening (5) in fluid connection with the reservoir (2) of the heat exchanger (10) for filling or emptying the phase-change material.

4. The device (10) according to one of the preceding claims, wherein the fluid lines (1) each run through the reservoir (2) parallel to a longitudinal axis (A) of the heat exchanger (11).

5. The device (10) according to claim 4, wherein the fluid lines (1) extend in cross-section through the heat exchanger (11), viewed perpendicular to the longitudinal axis (A), around arcs of a circle (13), in particular wherein the arcs of a circle (13) are arranged concentrically around the longitudinal axis (A) of the heat exchanger (11).

6. The device (10) according to one of the preceding claims, wherein the at least one fluid line (1) comprises structural elements for enhancing heat transfer between the phase-change material and the fluid medium.

7. The device (10) according to one of the preceding claims, wherein the phase transition temperature of the phase-change material lies in the range from -50° to +100 °C, in particular in a range between 10 K and 20 K relative to the ambient temperature surrounding the device (10).

8. The device (10) according to one of the preceding claims, wherein the phase-change material comprises at least one of the following: a salt hydrate, an alcohol, an ester, in particular a fatty acid ester, or an organic material, in particular paraffin.

9. The device (10) according to one of the preceding claims, comprising a plurality of heat exchangers (11) which are in fluid communication with one another in series via their respective at least one fluid line (1), and wherein their respective reservoirs (2) each contain phase-change materials with phase transition temperatures that differ from one another.

10. The device (10) according to claim 9, wherein the phase transition temperatures of the respective phase-change materials in the respective reservoirs (2) decrease or increase monotonically along the fluid connection.

## Revendications

1. Dispositif (10) d'émission et d'absorption de chaleur latente, présentant :
- un caloporteur (11), présentant un réservoir (2) pouvant être rempli ou rempli d'un matériau de changement de phase qui est limité par une paroi (6) qui présente une ouverture de remplissage (5) pour le remplissage ou vidage du matériau de changement de phase, ainsi que plusieurs conduites de fluide (1) s'étendant à travers le réservoir (2), à travers lesquelles un milieu fluide peut être écoulé, dans lequel chaque conduite de fluide (3) s'étend d'une première ouverture respective (3) de la paroi (6) à une seconde ouverture respective (4) de la paroi (6) à travers le réservoir (2) du caloporteur (11) de sorte que les conduites de fluide (3) sont séparées l'une de l'autre à chaque fois par le biais du réservoir (2) et de sorte que, lorsque le milieu fluide s'écoule à travers le caloporteur (11), de la chaleur latente peut être transférée du matériau de changement de phase au milieu fluide par échange de chaleur entre les conduites de fluide (1) et le réservoir (2) avec absorption thermique à travers le milieu fluide ou peut être absorbée par le milieu fluide à travers le matériau de changement de phase par émission de chaleur, et
- une installation d'écoulement (12) qui est réalisée pour générer et inverser un écoulement du milieu fluide le long de la conduite de fluide (1).

2. Dispositif (10) selon la revendication 1, dans lequel l'installation d'écoulement (12) et l'au moins une conduite de fluide (1) peuvent être déplacées l'une par rapport à l'autre de telle sorte que la direction d'écoulement peut être inversée avec un mouvement relatif entre l'installation d'écoulement (12) et l'au moins une conduite de fluide (1).

3. Dispositif (10) selon la revendication 1 ou 2, présentant en outre au moins une ouverture de remplissage (5) en connexion fluidique avec le réservoir (2) du caloporteur (10) pour le remplissage ou vidage du matériau de changement de phase.

4. Dispositif (10) selon une des revendications précédentes, dans lequel les conduites de fluide (1) s'étendent chacune parallèlement à un axe d'extension longitudinale (A) du caloporteur (11) à travers le réservoir (2).

5. Dispositif (10) selon la revendication 4, dans lequel les conduites de fluide (1) s'étendent, visualisées en coupe transversale à travers le caloporteur (11) perpendiculairement à l'axe d'extension longitudinale (A), autour d'arcs de cercle (13), notamment dans lequel les arcs de cercle (13) sont disposés de manière concentrique autour de l'axe d'extension longitudinale (A) du caloporteur (11).

6. Dispositif (10) selon une des revendications précédentes, dans lequel l'au moins une conduite de fluide (1) présente des éléments structurels pour l'augmentation d'un transfert thermique entre le matériau de changement de phase et le milieu fluide.

7. Dispositif (10) selon une des revendications précédentes, dans lequel la température de transition de phase du matériau de changement de phase se situe dans la région de -50° à +100 °C, notamment dans une région entre 10 K et 20 K par rapport à une température ambiante entourant le dispositif (10).

8. Dispositif (10) selon une des revendications précédentes, dans lequel le matériau de changement de phase présente au moins un des composés suivants : un sel hydraté, alcool, ester, notamment ester d'acide gras, ou un matériau organique, notamment de la paraffine.

9. Dispositif (10) selon une des revendications précédentes, présentant plusieurs caloporteurs (11) qui sont en connexion fluidique en série l'un avec l'autre par le biais de leur au moins une conduite de fluide respective (1) et dans lequel leurs réservoirs respectifs (2) présentent chacun des matériaux de changement de phase de différentes températures de transition de phase l'un de l'autre.

10. Dispositif (10) selon la revendication 9, dans lequel les températures de transition de phase des matériaux de changement de phase respectifs dans les réservoirs respectifs (2) décroissent ou augmentent de manière monotone le long de la conduite de fluide.
